# DEMANDE DE BREVET EUROPEEN

(11) **EP 4 841 524 A1**
(43) Date de publication de la demande: **18.11.2026**
(21) Numéro de dépôt: 26176996.2
(22) Date de dépôt: 06.05.2026
(51) Int. Cl.: G06N 10/40, G06N 10/70

(54) **LECTURE DE QUBITS PAR ADRESSAGE NUMERIQUE SIMULTANE DE TRANSISTORS A UN ELECTRON**

(30) Priorité: 14.05.2025 FR 2505119
(71) Demandeur: Commissariat à l'Energie Atomique et aux Energies Alternatives, 75015 Paris (FR)
(72) Inventeur: CASANOVA, Jean-Baptiste, 38054 GRENOBLE Cedex 09 (FR); BADETS, Franck, 38054 GRENOBLE Cedex 09 (FR); SCHMIDT, Quentin, 38054 GRENOBLE Cedex 09 (FR); JADOT, Baptiste, 38054 GRENOBLE Cedex 09 (FR); THONNART, Yvain, 38054 GRENOBLE Cedex 09 (FR)
(74) Mandataire: Atout PI Laplace

(57) **Abrégé**

Dispositif quantique comprenant une pluralité de qubits de spin (Qubit1, ... Qubitn), un cryostat (10) contenant lesdits qubits, des électromètres (SET1, ... SETn) couplés chacun à un qubit de la pluralité pour extraire, pour chaque qubit, un signal de lecture d'un état courant du qubit, un module de génération de tensions (200) générant une pluralité de tensions pour exciter lesdits électromètres avec des modulations propres à chaque électromètre, et une ligne de transmission (40) pour transmettre un signal agrégé issu des électromètres, ledit signal agrégé étant traité par un module de démultiplexage (100) du dispositif quantique pour reconnaître par démodulation les états courants des qubits de la pluralité. Le module de génération de tensions (200) génère des séquences périodiques (SE1, ... SEn) cadencées à une fréquence de référence (fc), lesdites séquences périodiques générées étant distinctes les unes des autres et utilisées pour exciter de manière différenciée les qubits de la pluralité, le module de démultiplexage (100) accédant aux états courants des qubits à l'aide de ladite fréquence de référence (fc) et desdites séquences périodiques (SE1, ... SEn).

## Description

### Contexte technique

Les systèmes de processeurs ou de composants quantiques pour la manipulation de qubits comprennent une électronique de contrôle et de lecture qui peut prendre la forme d'un circuit microélectronique. Celui-ci doit disposer d'une interface avec les qubits. On se projette vers des systèmes incluant des dizaines ou une centaine de qubits physique, voire beaucoup plus.

On cherche à réaliser des qubits logiques, présentant un temps de cohérence et donc un taux d'erreur permettant sa manipulation et sa lecture dans des temps raisonnables.

Parmi les solutions disponibles, assembler plusieurs de ces qubits physiques afin de former un qubit logique est une des pistes les plus populaires. En fonction de la technologie de qubits utilisée et donc du taux d'erreur intrinsèque des qubits, le nombre de qubits physiques nécessaires pour réaliser un qubit logique varie de plusieurs ordres de grandeurs et requiert dans certaines hypothèses un système complet de plusieurs milliers voire millions de qubits physiques.

L'interface de lecture doit donc permettre de gérer plusieurs millions de qubits physiques, et cela est évidemment une difficulté considérable, quelle que soit la technologie de qubits. On utilise la technique du multiplexage qui consiste à faire passer plusieurs informations à travers un seul support de transmission. Plusieurs propositions de l'état de l'art traitent de ce problème et proposent des solutions de multiplexage en regard du temps de lecture voulu (1/Fread). Le multiplexage peut être temporel, ce qui implique de lire les différents éléments d'un ensemble les uns après les autres. Le multiplexage peut également être fréquentiel, ce qui implique de superposer les signaux issus de plusieurs éléments d'un ensemble au sein d'un seul signal, chaque élément de l'ensemble présente une fréquence qui lui est propre, et de les différencier ensuite à l'aide d'une analyse fréquentielle. La question se pose alors de la bande passante (BW pour bandwidth) pour un système comme celui-ci ainsi que de l'intervalle de fréquence disponible entre chaque élément (ΔF). Ces contraintes viennent définir la capacité de multiplexage d'un système. Le nombre d'éléments pouvant être multiplexés N est en effet égal au rapport entre la largeur BW de la bande passante et l'espacement spectral ΔF disponible entre deux éléments multiplexés : N=BW/ΔF.

La modulation en fréquence est considérée pour la lecture des qubits supra conducteur et des qubits de spin. Une méthode similaire propose d'augmenter la compacité spectrale du multiplexage, en assignant une fréquence identique à plusieurs éléments à multiplexer, tout en les différenciant par la phase. Ceci donne la possibilité de multiplexer des signaux au nombre de N=MBW/ΔF, avec M le nombre de phases différentes avec lequel la capacité de multiplexage croît linéairement pour une BW et un ΔF donné si l'espace fréquentiel est entièrement utilisé et que chaque fréquence est répartie sur M phases.

Le présent document traite dans ce contexte d'une nouvelle méthode de multiplexage pour la lecture d'un grand nombre de qubits. L'invention propose d'examiner les différents qubits du système à une fréquence unique, avec un signal numérique à signaux carrés, et de différencier les qubits par des codes numériques propres à chacun d'entre eux.

L'état de l'art aujourd'hui présente divers systèmes de lecture et donc de multiplexage qui sont utilisés avec diverses technologies de qubits.

Des méthodes de lecture représentées dans le domaine auquel s'applique ce brevet sont basées sur une conversion spin - charge. Cette conversion permet de traduire l'état du qubit, (|1> ou |0>) en une quantité de charge dans un détecteur. Pour obtenir cet effet, un détecteur est couplé électrostatiquement au qubit et le détecteur est connecté à l'électronique de lecture.

Les technologies basées sur les supraconducteurs ou les qubits de spin utilisent parfois la réflectométrie pour lire l'état des qubits. La réflectométrie est une méthode de lecture basée sur un couplage entre un résonateur radiofréquences (LC) et un qubit. L'état du qubit fait varier une capacité électrique dans le résonateur, appelée capacité quantique, de quelques dizaines voire centaines d'attofarads en fonction de l'état du qubit. Cette capacité quantique est une grandeur du détecteur. Elle fait donc partie du résonateur dédié à la lecture, et permet d'obtenir une image de l'état du qubit. Un signal haute fréquence est envoyé à l'entrée du résonateur de lecture et, selon la valeur du qubit, la capacité décale ou ne décale pas la fréquence de résonnance du résonateur. Cela se traduit par une modification de la réflexion du signal incident et donc une modification de l'amplitude et de la phase du signal réfléchi.

Une autre manière utilisée cette fois principalement avec les qubits de spin est la lecture de charge. Le détecteur couplé au qubit voit sa conductance varier en fonction de l'excitation du qubit. Si le détecteur est alors correctement polarisé en régime SET (Single Electron Transistor, transistor à un seul électron) la variation de l'état du qubit peut faire déplacer l'état du SET sur un pic de coulomb. Cela se traduit par un courant A pour l'état |1> et un courant B pour l'état |0>. Dans le cas idéal, le courant A peut-être plus grand qu'un nA et le courant B est quasiment égal à 0.

Dans A. Ruffino, et al, « A cryo-CMOS chip that integrates silicon quantum dots and multiplexed dispersive readout electronics », Nat. Electron., vol. 5, no 1, p. 53-59, déc. 2021, une lecture multiplexée par réflectométrie a été présentée. L'article présente une matrice 3x3 d'éléments quantiques (Quantum dots). Des inductances intégrées peuvent être connectées à des éléments quantiques distincts via des tensions appliquées aux grilles de transistors. Ces principes nécessitent autant d'inductances qui d'élément à lire, et de plus des fréquences très précises doivent être générées à chaud, ce qui ne permet pas le passage à l'échelle.

Dans H. Fuketa, et al, « A Cryogenic CMOS Current Integrator and Correlation Double Sampling Circuit for Spin Qubit Readout », IEEE Trans. Circuits Syst. Regul. Pap., vol. 70, no 12, p. 5220-5228, déc. 2023, un circuit de lecture par intégration de courant permet de diminuer le temps de lecture des qubits, de réduire la consommation et d'améliorer les performances de lectures par rapport à une construction électronique à température ambiante. Ce circuit se place dans le cadre d'une lecture de charge. Le circuit intègre dans un premier temps le courant fourni par le SET puis à l'aide d'un comparateur détermine si un courant a traversé le SET, ce qui traduit l'état du qubit. Cependant le circuit consomme une puissance importante, ce qui ne permet pas le passage à l'échelle.

Les documents FR3117475A1 et Compact frequency multiplexed readout of silicon quantum dots in monolithic FDSOI 28nm technology Schmidt et al arXiv:2410.22565 oct 2024 divulguent une lecture multiplexée en fréquence avec une lecture par charge par un transistor à un électron (SET) utilisé comme électromètre et qui transmet un courant en fonction de l'état du qubit auquel il est couplé. Une fréquence est associée à chaque SET et donc à chaque qubit, et les courants des SET sont additionnés avant que la somme soit amplifiée et démodulée. L'état de chaque qubit est retrouvé par une analyse en fréquence. Le système nécessite soit une transformation en tension, soit un traitement en courant. L'utilisation de TIA est proposée afin de passer des courants aux tensions tout en amplifiant le signal.

La demande de brevet FR3150327A1 présente une méthode de multiplexage en phase à codage direct sur qubits pour la lecture multiplexée de SETs ce qui permet une plus grande densité de multiplexage. Ce document divulgue d'affecter une phase propre à chaque SET d'un groupe de SETs. Ceci permet d'affecter la même fréquence à différents SETs avec une phase différente. Des schémas de modulations peuvent alors être appliqués au multiplexage de SETs et permettent de passer à l'échelle. Dans le cas idéal où le TIA présente une bande passante (BW) fixe, un espacement spectral (ΔF) pour chaque fréquence et M phases, le nombre de qubits pouvant être multiplexés passe de N = BW/ΔF à N = M BW/ΔF. Une modulation QAM a été réalisée sur silicium, utilisant les principes développés dans ce document.

Les réalisations évoquées ci-dessus montrent que les différentes techniques de multiplexage connues pour la lecture de qubits nécessitent des composants en nombre proportionnel au nombre de qubits à multiplexer. La réflectométrie qui permet un multiplexage en fréquence requiert autant d'inductances que de fréquences ainsi que la génération d'un signal contenant toutes les fréquences. Les solutions à base d'intégrateurs ne permettent pas d'autre lecture massive que la lecture séquentielle de qubits, ce qui ne constitue pas une lecture parallèle, comme cela est souhaité. Enfin les schémas de multiplexage en fréquence et phase associés à une lecture de charge permettent la mise en commun d'un amplificateur pour N qubits, mais les N fréquences déphasées doivent être générées et amenées vers les qubits.

### Caractéristiques de l'invention et avantages

Pour permettre la lecture parallèle d'un grand nombre de transistors à un électron ou plus largement d'électromètres couplés à des qubits pour lire leurs états, il est proposé un dispositif quantique comprenant une pluralité de qubits de spin, un cryostat contenant lesdits qubits, des électromètres couplés chacun à un qubit de la pluralité pour extraire, pour chaque qubit, un signal de lecture d'un état courant du qubit, un module de génération de tensions générant une pluralité de tensions pour exciter lesdits électromètres avec des modulations propres à chaque électromètre, et une ligne de transmission pour transmettre un signal agrégé issu des électromètres, ledit signal agrégé étant traité par un module de démultiplexage du dispositif quantique pour reconnaître par démodulation les états courants des qubits de la pluralité.

De manière remarquable, le module de génération de tensions génère des séquences périodiques cadencées à une fréquence de référence), lesdites séquences périodiques générées étant distinctes les unes des autres et utilisées pour exciter de manière différenciée les qubits de la pluralité, le module de démultiplexage accédant aux états courants des qubits à l'aide de ladite fréquence de référence et desdites séquences périodiques.

Ainsi, le présent document propose une nouvelle méthode de lecture de qubits par adressage numérique simultané de transistors à un électron, à travers une nouvelle manière de multiplexer les signaux lors de la lecture par charge à l'aide de codes numériques. Il est proposé de générer plusieurs codes qui sont utilisés pour moduler chaque transistor à un électron indépendamment. A la différence de la modulation en fréquence et en phase, les signaux numériques sont générés à une fréquence commune. Ainsi un seul signal nécessite d'être amené dans le cryostat depuis la température ambiante pour le multiplexage. Ce signal est la fréquence d'horloge du contrôleur numérique. Le multiplexage est donc dans certains modes de réalisation engendré au sein du cryostat, et il n'y a donc que peu de câbles, comparé à l'art antérieur, à faire passer à travers l'enceinte de température.

Selon des caractéristiques optionnelles et avantageuses :
les séquences périodiques sont, optionnellement et avantageusement des séquences d'Hadamard, des séquences de Gold, ou des séquences de Kasami. Alternativement, d'autres manières de générer des séquences orthogonales comme le pseudo noise sont utilisées.

Les séquences périodiques peuvent être générées, comme mentionné précédemment, par le module de génération de tensions à l'intérieur du cryostat.
le module de démultiplexage peut procéder, séquence par séquence, éventuellement en parallèle (toutes les séquences peuvent être traitées en même temps), par intégration du signal agrégé multiplié par la séquence périodique sur un temps de lecture commun aux différentes séquences, pour reconnaître la présence ou l'absence de la séquence périodique dans le signal agrégé.
le signal agrégé peut être préalablement traité par un module de numérisation aux fins de la démodulation par le module de démultiplexage. Une démodulation directement sur le signal est mise en œuvre dans un autre mode de réalisation.
ou le signal agrégé peut être démultiplexé à l'intérieur du cryostat par un circuit analogique (400) comprenant pour chaque qubit une capacité et un comparateur.
le dispositif quantique comprend des modules de mise à niveau de tension pour adapter aux points de polarisation des électromètres des tensions fournies par un générateur numérique de tension du module de génération de tensions, chaque module de mise à niveau comprenant un commutateur piloté pour alterner entre deux tensions continues, ou un diviseur de tension résistif ou capacitif.
le module de génération de tensions génère des codes numériques sur deux niveaux.
le module de génération de tensions comprend, optionnellement et avantageusement, un registre à décalage par qubit de la pluralité de qubits et donc par électromètre associé aux fins de générer les différentes séquences périodiques. D'autres modes de réalisation ne comprennent pas de registre à décalage.
le module de génération de tension est mis en commun pour plusieurs pluralités de qubits associées chacune à un signal agrégé propre.
les qubits et les électromètres sont optionnellement et avantageusement des transistors à un électron.
les qubits et les électromètres sont construits en face à face dans un matériau semi-conducteur.
les séquences périodiques générées sont fournies au module de démultiplexage dans le cryostat par le module de génération de tensions, ou à l'extérieur du cryostat par un module synchronisé avec le module de génération de tensions.
la fréquence de référence est fournie au générateur de tensions par un générateur de signal d'horloge extérieur au cryostat.
le signal agrégé est avant d'être transmis au module de démultiplexage amplifié par une chaîne placée sur un étage de température ou répartie sur plusieurs étages de température du cryostat.

### Liste des figures

La figure 1 représente dans un mode de réalisation l'impact du couplage entre le qubit et le SET ainsi que l'image du courant une fois celui-ci modulé.
La figure 2 présente un schéma de lecture par séquence d'étalement, selon un mode de réalisation de l'invention.
La figure 3 montre un exemple de communication avec une modulation tout ou rien (OOK) pour quatre qubits.
La figure 4 montre un exemple de déroulé des principes de la figure 3 dans un scénario.
La figure 5 montre un exemple de Schéma bloc de 16 registres à décalages longueur pour la génération des séquences d'étalement.
La figure 6 montre un exemple de matrice utilisé dans un mode de réalisation de l'invention.
La figure 7 montre un exemple de dispositif permettant la réalisation d'un transistor à un électron et d'un qubit.
La figure 8 montre un exemple de cartographie de transistor à un électron à deux grilles.
La figure 9A montre un exemple de modulation numérique de transistor à un électron avec tensions extérieures.
La figure 9B montre un détail de réalisation d'un autre exemple de modulation numérique de transistor à un électron avec tensions extérieures.
La figure 9C montre un détail de réalisation d'un autre exemple de modulation de transistor à un électron avec tensions extérieures. Le circuit montré permet de garantir que le signal externe est à la bonne dynamique pour le système, à l'aide d'atténuateurs.
La figure 10 montre des placements des blocs de gain dans différentes variantes.
La figure 11 montre un exemple de modulation.
La figure 12 montre les signaux en sortie de transistor à un électron.
La figure 13 montre des signaux lors de la démodulation d'un transistor à un électron.
La figure 14 montre des signaux cumulés lors de la démodulation de plusieurs transistors à un électron.
La figure 15 montre un exemple de chaîne de démodulation à chaud.
La figure 16 montre un exemple de chaîne de démodulation analogique à froid.
La figure 17 montre un exemple de lien série vers l'extérieur du cryostat.

### Description en relation avec les figures

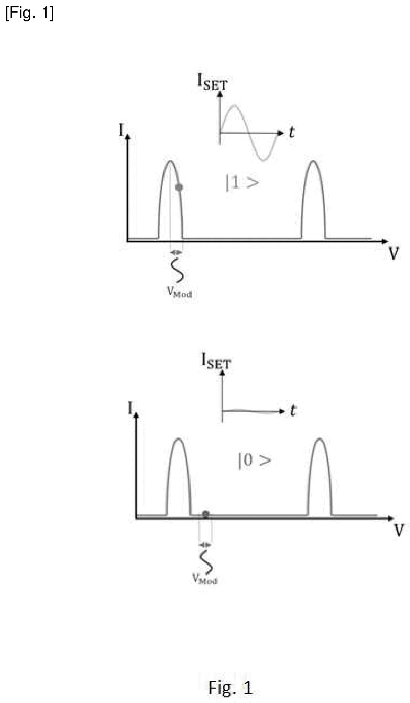

[Fig. 1] La figure 1 montre deux représentations (graphes principaux en partie haute et en partie basse de la figure) pour un transistor à un électron, de l'intensité sortante du transistor (I en ordonnées) en fonction de la tension (V en abscisses) à la grille de ce transistor. On reconnait des pics de Coulomb du transistor, distants l'un de l'autre de quelques dizaines millivolts et larges de quelques millivolts.

En fonctionnement, la tension de grille V fait l'objet d'une modulation dans un petit intervalle autour d'une valeur moyenne, comme représenté sur les deux parties de figure avec la mention Vmod. Cette valeur moyenne et la modulation autour de cette valeur moyenne sont fixées.

Dans la partie haute de la figure, le qubit est à la valeur |1> et la valeur moyenne de tension est dans la largeur d'un des deux pics de Coulomb du transistor, à proximité de son maximum. Le transistor est alors passant et délivre un courant indiqué dans l'encart de la partie haute, en ordonnées, en fonction du temps en abscisses : le courant sortant reproduit l'évolution dans le temps de la tension appliquée à la grille.

Dans la partie basse de la figure, le qubit est à la valeur |0> et la valeur moyenne de tension est en dehors de chacun des pics de Coulomb du transistor. Le transistor est alors non-passant et délivre un courant indiqué en ordonnées dans l'encart en fonction du temps des abscisses, ce courant étant proche de 0 A et en tout cas d'extrema bien plus proches de 0 A que les extrema du courant obtenu quand le qubit est à la valeur |1>.

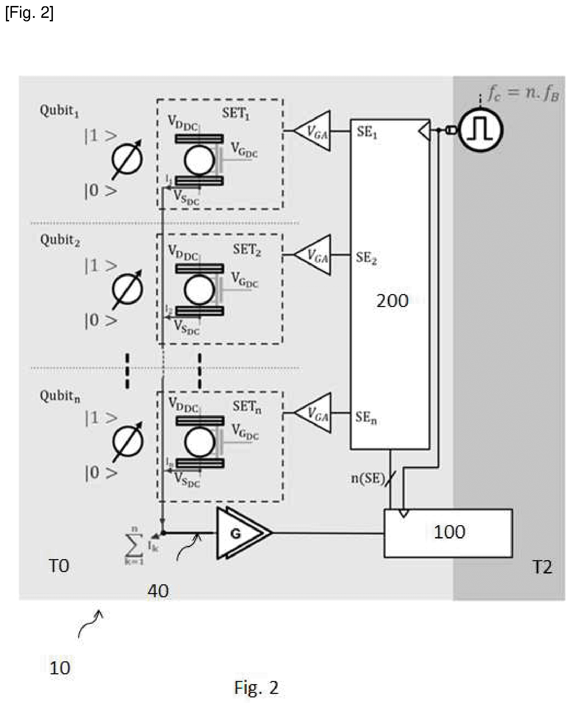

[Fig. 2] La figure 2 montre un ensemble de n qubits de spin (n étant un nombre entier) notés Qubit1, Qubit2, ... Qubitn, pouvant prendre notamment les valeurs |0> et |1>. Ces qubits sont placés dans une enceinte de température très basse, à une température T0 d'un cryostat 10.

Chacun des qubits est couplé à un transistor à un électron (SET pour single electron transistor) aux fins de la lecture de l'état du qubit correspondant. Les transistors sont notés SET1, SET2, ..., SETn. Ils sont placés au plus près des qubits, et donc dans l'étage de température T0.

Chaque transistor a un drain recevant une tension constante VD(DC) qui peut être la terre. Chaque transistor a une grille qui reçoit une tension modulée VG(DC). Chaque transistor a aussi une source qui délivre un courant de source I1, I2, ... In. Les courants des sources des différents transistors sont sommés sur une ligne 40, ici unique, et en tout cas commune aux n transistors. Cette ligne comprend un amplificateur ou une succession d'amplificateurs, représenté sous la notation G. Cette chaîne d'amplification est ici à la température T0. Elle amène le signal résultant de la somme des signaux de lecture des différents qubits vers un module de démodulation 100, qui est placé entièrement à température T0, ou en partie à température T0, et en partie à une température supérieure T2 (T2>T0). Le module de démodulation est chargé d'extraire du signal amplifié les signaux des différents qubits qui ont été multiplexés dans un unique courant électrique. La démodulation est soit numérique soit analogique.

Plusieurs séquences numériques sont générées à froid, c'est-à-dire dans l'étage de température T0, par le contrôleur numérique 200 et sont utilisés de moduler chaque transistor indépendamment des autres. Les séquences numériques sont générées à une seule fréquence, fondée sur un signal d'horloge unique. Un signal d'horloge commun est en effet généré à chaud, c'est-à-dire à température T2 et descendu dans le cryostat depuis la température ambiante pour la génération des séquences par le contrôleur numérique 200. Ce signal commun est une fréquence d'horloge fc (fréquence chip, inverse du temps chip et égale à n fois la fréquence bit, à savoir l'inverse du temps bit). Les séquences numériques sont qualifiées de séquence d'étalement (SE). Il y en a une différente pour chaque transistor. Ces séquences d'étalement sont les codes numériques associés à chaque transistor de lecture de qubit qui permettent de les identifier dans le processus de la démodulation.

Les séquences d'étalements envoyées à chaque transistor à un électron permettent de moduler les courants de sortie, qui sont eux-mêmes modulés par l'état du qubit auquel le transistor est associé aux fins de la lecture. Ainsi, il y a multiplexage de signaux de lecture de l'état des qubits lors de la lecture par charge à l'aide des codes numériques. Les transistors à un électron sont modulés et leurs courants de sortie sont sommés, ce qui permet d'avoir l'information des N SETs dans un seul fil.

Les séquences d'étalement présentent des propriétés d'orthogonalité ou à minima de bonnes propriétés de corrélation ce qui permet d'identifier chaque séquence individuellement dans un signal comprenant toutes les séquences d'étalement.

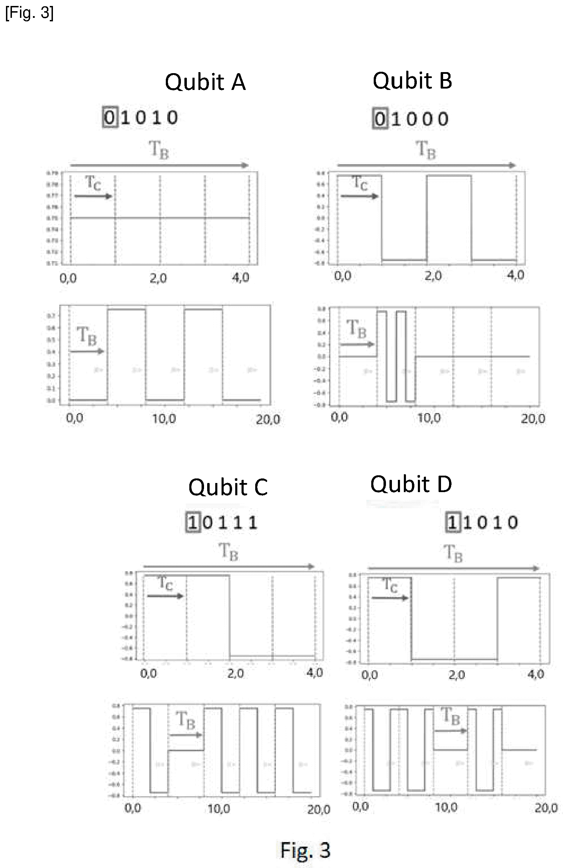

[Fig. 3] Cette méthode permet de reconnaître un qubit particulier dans un canal de lecture multiplexé en fonction du code qui lui est associé. Pour représenter ce mécanisme la Figure 3 montre le cas de quatre qubits, une séquence d'étalement étant associée à chaque qubit. Ces séquences d'étalements sont composées de 4 temps chip (TC) qui ensemble forment 1 temps bit (TB). La modulation appliquée par les données de qubit est de type OOK (tout ou rien) conformément au résultat de la lecture d'un transistor à un électron qui laisse passer le signal modulé ou ne le laisse pas passer en fonction de l'état courant du qubit et du fait de son couplage à celui-ci.

L'exemple de la figure montre donc que les données à transmettre par chaque qubit font apparaître la séquence d'étalement du qubit concerné dans le canal ou à l'inverse ne la font pas apparaitre. Dans l'exemple du qubit D de la Figure 3, on voit que son canal présente un signal nul sur le 3ème bit et sur le 5ème bit transmis puisque les données à transmettre sont : [1, 1, 0, 1, 0] : il y a un 0 en 3^{e} position et un 0 en 5^{e} position.

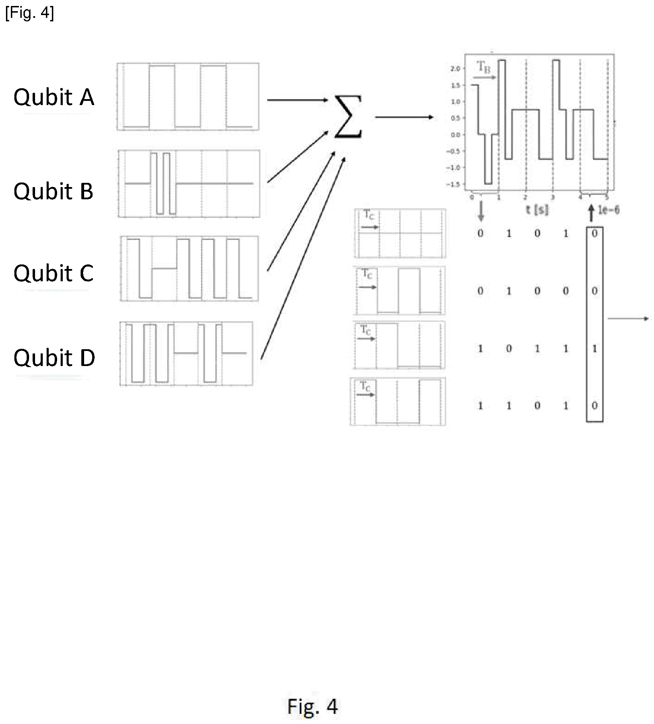

[Fig. 4] La Figure 4 développe le cas de la Figure 3 et montre que si les séquences sont synchronisées entre elles puis additionnées pour former un nouveau signal, il est possible de connaître la valeur du bit transmis par chaque qubit sur chaque temps bits TB au sein de ce signal agrégé. Dans l'exemple de la Figure 3 et de la Figure 4, les séquences d'étalement sont choisies selon la matrice d'Hadamard, ce qui garantit des propriétés d'orthogonalité entre les séquences et une très bonne autocorrélation ainsi que le fait que ces séquences sont synchrones entre elles. Ainsi si sur un temps bits TB, le signal agrégé est multiplié par la séquence d'un qubit, et si la séquence du qubit est présente, le résultat est différent de 0 alors que si la séquence n'est pas présente, le résultat est égal à 0.

La manière de trouver une séquence dans le signal agrégé ou de constater son absence est de multiplier chaque élément de la séquence d'étalement (SE) à son élément correspondant sur le temps bit du signal agrégé puis de faire la somme de tous ces produits. Ce chiffre une fois divisé par le nombre de canaux dans le signal, dans cet exemple n= 4, est normalisé entre 0 et 1 et correspond à l'équation suivante où il est appelé Cf pour facteur de corrélation $Cf = \frac{1}{n} {\sum }_{i = 0} SE \left[i\right] . SumSignal \left[i\right]$.

Les séquences d'étalement sont envoyées en continu par le contrôleur numérique 200 visible en figure 2. Les courants des transistors de lecture modulés par les qubits associés sont ensuite sommés et envoyés vers un amplificateur.

Dans le cas où les séquences d'étalement utilisées sont orthogonales entre elles, le signal n'est pas dégradé par une interférence inter séquence. L'orthogonalité permet de conserver un taux d'erreur BER optimal car le rapport signal sur bruit n'est affecté que par le bruit de la chaîne.

Dans le cas idéal où le multiplexage ne dégrade pas le SNR, le nombre d'éléments possible à multiplexer à l'aide de codes numériques est donc ${N}_{code} = \frac{BW}{{F}_{read}} = \frac{{T}_{B}}{{T}_{c}}$ avec BW la bande passante du système (dominé par l'amplificateur TIA), Fread l'inverse du temps de lecture voulu par le système pour obtenir la valeur des qubits.

Ce résultat vient du nombre possible de codes orthogonaux différents qui peuvent être générés. Dans le cas où TB=N.TC (le rapport entre temps bit et temps chip est N) les séquences de chaque qubit sont toutes de longueurs N et donc dans un espace de dimension N. Il est donc possible de mettre en parallèle N qubits sans qu'une séquence n'interfère avec les autres.

Dans le cas de séquences non orthogonales le nombre des éléments pouvant être multiplexés dépend des séquences choisies, et peut être élevé mais au prix de différentes concessions, comme des séquences longues ou encore un facteur d'intercorrélation élevé impliquant des performances en bruit dégradées.

La solution permet la lecture parallèle d'un grand nombre de transistors à un électron, ce nombre étant sensiblement égal au ratio de la bande passante du système et du temps de lecture. Les séquences d'étalement sont dans certains modes de réalisation générées à froid. Une seule fréquence peut être utilisée, à savoir 1/TC=fc. Seul le signal d'horloge est à fournir, et il peut être généré à chaud.

On s'intéresse maintenant plus en détail aux différents blocs d'un système capable de sonder en parallèle 16 transistors à un électron SETs en 1 µs à l'aide d'une modulation effectuée dans l'étage de faible température T0.

En reprenant la structure présentée en Figure 2, on liste cinq fonctions pour réaliser l'invention. Il s'agit de la génération des séquences pour le multiplexage à l'aide de codes numériques, la mise à l'échelle des signaux numériques pour les transistors à un électron, les paires transistors pour lecture de qubits et qubits associés, une chaîne d'amplification pour amener tous les signaux vers le bloc de démodulation, et la fonction de démodulation.

### Génération de séquences

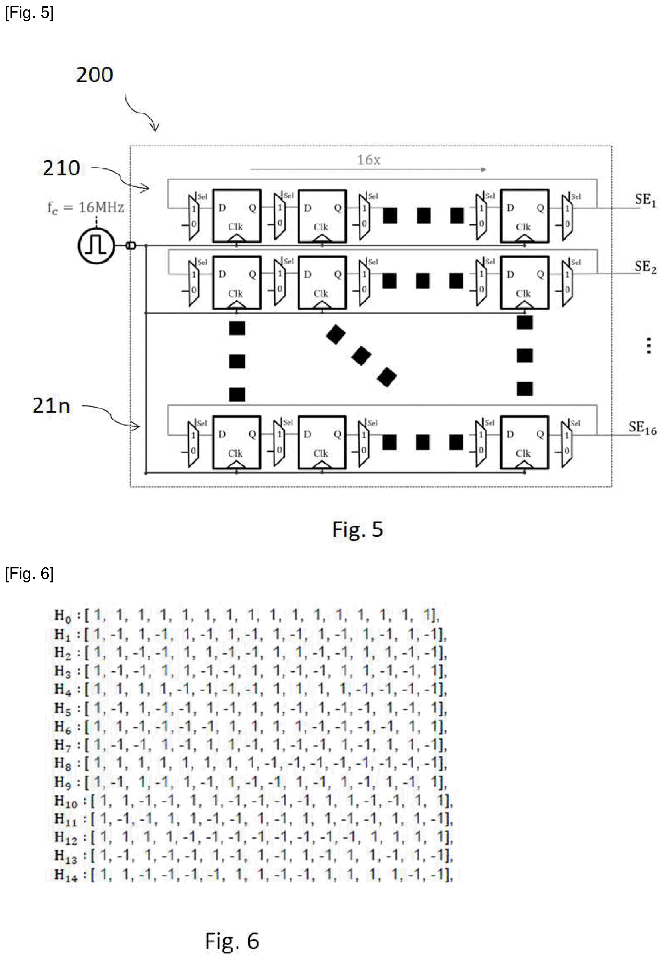

[Fig. 5] S'agissant de la génération des séquences pour le multiplexage à l'aide de codes numériques, le contrôleur numérique 200 de la figure 2 est réalisé dans un mode de réalisation comme montré à la Figure 5 avec 16 registres à décalages 210, ... 21n, de longueur chacun 16. La Figure 5 montre l'entrée d'horloge fc= 16 MHz amenée de l'extérieur qui cadence le circuit ainsi que 16 sorties en parallèle, SE1 à SE16.

[Fig. 6] Dans un mode de réalisation on réalise 16 séquences orthogonales entre elles, à l'aide d'une matrice d'Hadamard de taille 16 par 16, où chaque ligne de la matrice est identifiée par Hi, comme représenté en figure 6. Ces 16 lignes sont donc composées de 2 niveaux (+1 et -1) et sont orthogonales entre elles.

Pour envoyer ces 16 séquences aux transistors de lecture SET, 16 registres à décalage sont pré-chargés via un réseau de multiplexeurs pilotés par un signal de sélection « Sel » en Figure 5. Chaque bascule j de la ligne i est pré-chargée avec l'élément Hij de la matrice Hadamard. Par exemple la première ligne de registre à décalages est entièrement pré-chargée à 1. Ceci peut être optimisé mais ici permet de montrer une architecture identique pour chaque séquence. Ainsi tant que le signal de sélection « Sel » est à l'état 0, les sorties sont toutes à 1 (premier élément de toutes les lignes Hadamard), puis lorsque « Sel » passe à 1 toutes les séquences défilent à la cadence d'horloge sur les 16 sorties en parallèles.

L'exemple a été exprimé à l'aide d'une matrice Hadamard qui permet de réaliser N séquences de longueur N, toutes orthogonales entre elles à conditions que N soit une puissance de 2. Il est également possible de prendre des sous-ensembles de la matrice Hadamard tel que 100 codes de longueurs 128 tous orthogonaux entre eux.

Cependant la matrice Hadamard n'est pas le seul moyen de générer des séquences numériques orthogonales entres elles.

Dans une variante on utilise les séquences de Gold. Les séquences de Gold sont des séquences de longueurs 2*ⁿ* - 1 où n correspond à la longueur du registre à décalage utilisé pour les générer. Ces séquences, à la différence des séquences d'Hadamard, sont périodiques de 2*ⁿ* - 1 ce qui facilite la transmission asynchrone.

Ces séquences présentent une bonne autocorrélation et une faible inter corrélation mais elles ne sont pas orthogonales comme les séquences issues de la matrice Hadamard. Elles ont une grande période et une apparence pseudo aléatoire.

Ces séquences présentent l'avantage de leur grande période qui peut éviter un problème de synchronisation entre l'émission et le décodage. Dans le cas d'applications où la démodulation est faite à chaud et les signaux remontent depuis le fond du cryostat, ces séquences de grandes périodes simplifient la mesure.

Dans une variante on utilise les séquences de Kasami. Les séquences de Kasami sont des séquences non orthogonales qui présentent de bons taux d'autocorrélation.

La relation entre la longueur L d'une séquence de Kasami et le nombre de séquence possible K est : $K = \sqrt{\left(L+1\right)}$*.* Pour avoir 16 qubits, la longueur de la séquence est au moins 255, et pour un système comme celui détaillé précédemment qui cherche à lire en 1 µs, la fréquence numérique 255 MHz.

Au travers de ces deux manières alternatives de générer des séquences pour le multiplexage par codes numériques les mécanismes importants peuvent donc être décrits comme : une bonne autocorrélation des signaux, une faible intercorrélation (voire nulle si les séquences sont orthogonales), un ratio longueur de la séquence sur nombre de séquences possible le plus faible possible, et une périodicité des séquences grande dans le cas d'une lecture à chaud. Des ensembles de séquences binaires remplissant ces critères, sont utilisés pour l'invention.

### Dispositif quantique

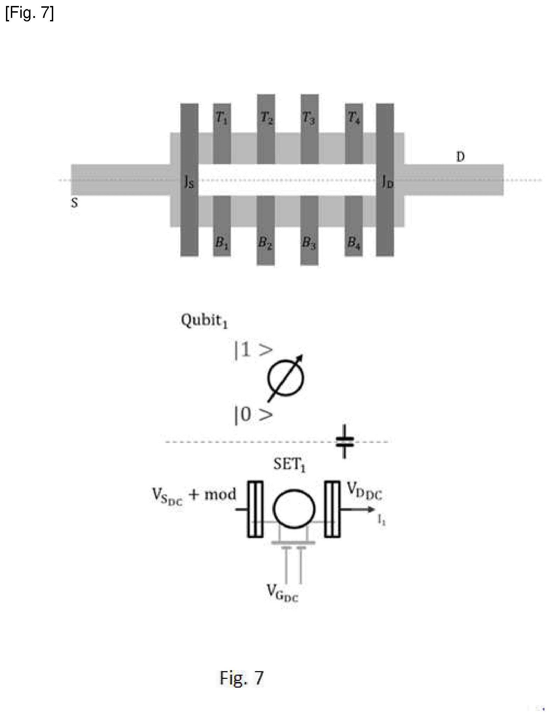

[Fig. 7] Les paires transistors à un électron pour lecture de qubit et qubits associés peuvent être construites selon un mode de réalisation avec des designs identiques pour le transistor de lecture et le qubit. La Figure 7 montre un exemple de dispositif réalisé en technologie semi-conducteur, conforme à B. C. Paz et al., "FDSOI Platform for Quantum Computing," 2024 IEEE International Electron Devices Meeting (IEDM), San Francisco, CA, USA, 2024, pp. 1-4. Deux canaux de conduction en parallèle partagent source S et drain D avec un espace entre eux. Le canal supérieur (T1 à T4) est dans un mode de réalisation utilisé pour réaliser la fonction qubit et le canal inférieur (B1 à B4) est alors utilisé comme détecteur, en accueillant les transistors de lecture SET. Chaque canal est surplombé par plusieurs grilles pour le contrôle fin des puits électrostatiques dans le canal. Chaque bit est couplé capacitivement avec le transistor de lecture qui lui est associé.

En regard des transistors de lecture qui sont modulés, le circuit générant les séquences pour le multiplexage en Figure 5 présente une sortie rail à rail puisque directement en sortie des bascules. Les transistors de lecture ont néanmoins besoin d'une modulation de faible amplitude autour d'un point de polarisation.

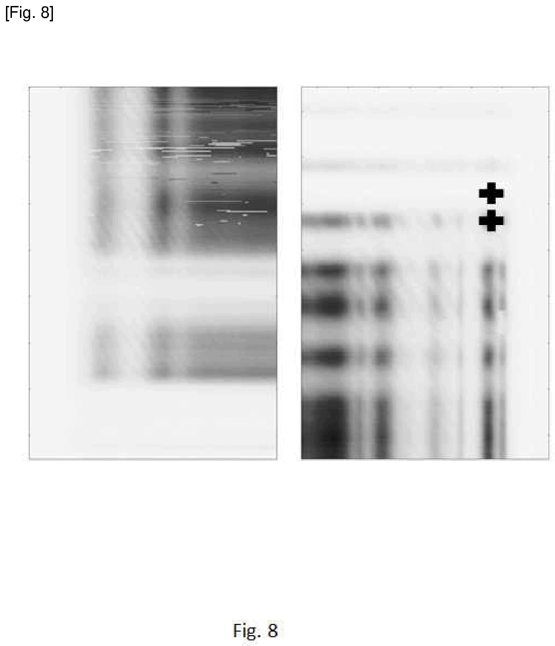

[Fig. 8] En Figure 8 est représentée la cartographie de polarisation de deux transistors à un électron, en l'occurrence un transistor NMOS (à gauche) et un PMOS (à droite), à double grille sur lesquelles la modulation par code numérique est appliquée.

Deux grilles sont utilisées et polarisées aux potentiels VGS1 (en abscisses) et VGS2 (en ordonnées) de la Figure 8. Le régime d'intérêt pour un détecteur sensible se trouve par exemple entre les croix représentées en Figure 8. Le régime du transistor de lecture (qui est donc sur un pic ou pas) dépend également des points de polarisation en potentiel continu DC tel que les VGS1 et VGS22 et donc de la tension drain source VDS. Dans cet exemple la modulation est faite par la source.

Le multiplexage par code numérique présenté ici est appliqué à une lecture de charge et en particulier des transistors à un électron lisant des qubits respectifs. D'autres dispositifs quantiques permettant la lecture de charge et dont un paramètre est modulable par un signal sont utilisés dans des variantes.

### Mise à l'échelle des signaux numériques

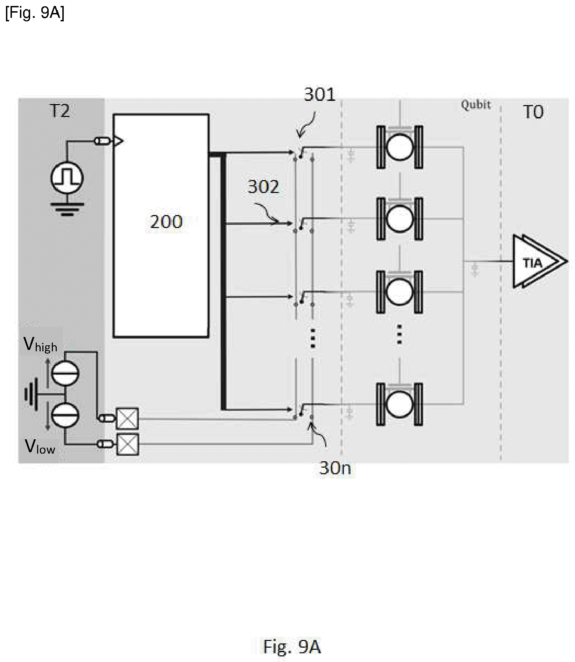

[Fig. 9A] L'amplitude de la modulation de tension appliquée individuellement à chaque transistor pour l'individualiser est faible et est dictée par la structure des transistors. Elle peut être la même pour chaque transistor. Il s'agit en l'occurrence de quelques mV pour la cartographie représentée en Figure 8. Or la modulation rail à rail du module numérique est dans divers modes de réalisation de plus grande amplitude. Un bloc permettant de la ramener vers l'amplitude souhaitée à l'entrée du transistor de lecture - il s'agit d'une mise à l'échelle ou mise à niveau, ou encore d'une atténuation - est donc utilisé dans un mode de réalisation.

Deux tensions d'alimentation Vhigh et Vlow sont générées à chaud, dans l'étage de température T2, et l'une ou l'autre est fournie aux transistors de lecture par l'intermédiaire d'interrupteurs 301, 302, ... 30n, commandés individuellement par le module numérique 200 pour former la séquence d'étalement associée au transistor visé.

Les interrupteurs pilotés par le contrôleur numérique 200 font commuter la tension ajoutée au point de polarisation VS de la source du transistor de lecture.

Dans certains modes de réalisation, on estime que la cartographie montrée en Figure 8 est susceptible de changer dans le temps. Il est donc prévu de changer les tensions Vhigh et Vlow.

La solution présentée ci-dessus est celle d'un convertisseur de niveaux numériques : un signal numérique d'une certaine amplitude est capté en entrée et se propage en sortie à l'amplitude d'une alimentation différente.

La Figure 9A propose une solution avec des interrupteurs. Des architectures alternatives de convertisseur de niveaux numériques qui respectent les critères de vitesse et qui ne provoquent pas de surconsommation sont utilisées dans d'autres modes de réalisation.

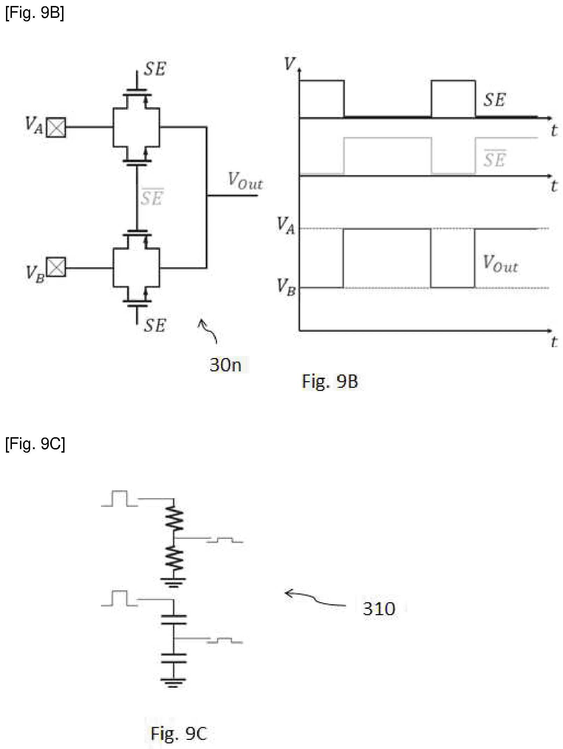

Dans l'exemple de la figure 9, les niveaux utilisés pour moduler les transistors de lecture reçoivent les deux mêmes tensions Vhigh et Vlow mais dans des variantes ce n'est pas le cas. Dans une variante un des deux niveaux de tension est adapté au transistor concerné et dans une autre variante les deux niveaux sont adaptés au transistor concerné.

Un mode de réalisation utilise un démultiplexeur équipé d'un étage d'échantillonneur-bloqueur (Sample and Hold) alimenté par un convertisseur analogique numérique.

[Fig. 9B] Une approche pratique est représentée en figure 9B. Il s'agit du détail des commutateurs présentés en figure 9A, les signaux Va et Vb en figure 9B étant analogues à Vhigh et Vlow en figure 9A. Cette approche est l'utilisation d'une porte de transmission pass *gate* qui permet de reproduire les transitions effectuées par le module numérique qui fournit la séquence d'étalement SE avec des niveaux bien précis VA et VB en formant l'interrupteur 30n. La résistance équivalente du circuit en position porte passante est réduite, ce qui est avantageux. Ce montage permet de reproduire le signal carré numérique SE envoyé par le module numérique et son opposé *S̅E̅* à des tensions différentes générées à l'extérieur.

[Fig. 9C] Une variante analogique est représentée en figure 9C et utilise des diviseurs passifs 310 (résistifs ou capacitifs). Le rapport de division est dans une variante un rapport piloté.

### Amplification

S'agissant de l'amplification, les transistors de lecture utilisés étant modulés par la source dans cet exemple, le schéma d'amplification utilisé est un amplificateur à transimpédance TIA. Cette solution tire parti du fait que les sorties des transistors de lecture sont en courant, ce qui permet de les sommer facilement puis de les amplifier en une tension. Un C-TIA (amplificateur à transimpédance capacitif) peut être utilisé.

Le TIA présente un gain suffisant de l'ordre de 60 dB et une bande passante permettant à la modulation des signaux de passer -pour une fréquence d'horloge à 16 MHz la fréquence de coupure du TIA est au moins 16 MHz.

L'amplificateur ou la chaîne d'amplification est utilisé pour amener les signaux vers le bloc de démodulation.

L'amplificateur C-TIA est remplacé dans des variantes par un TIA à architecture push-pull, un TIA à architecture cascode, un TIA résistif ou un TIA à architecture shunt-feedback. La contrainte en rapport signal sur bruit à la sortie et en bande passante est respectée en regard de l'architecture choisie. Le choix de topologie est effectué en fonction du dimensionnement de la chaîne de gain, du taux d'erreur BER souhaité, de la vitesse de lecture ainsi que de la consommation.

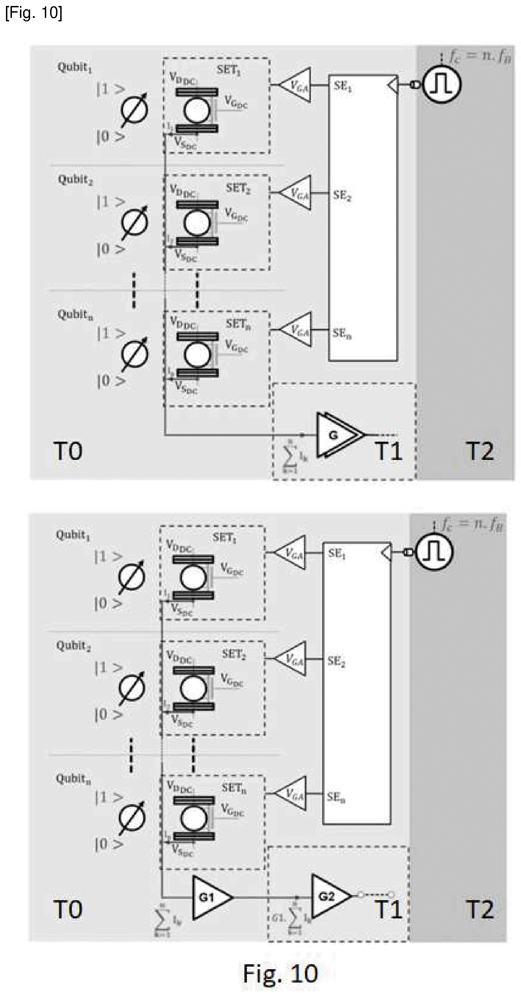

[Fig. 10] Différents placements en température sont utilisés comme montrés en Figure 10 où l'on voit en partie haute le bloc d'amplification G entièrement placé à une température qui n'est pas celle de fonctionnement des qubits T0 mais, une température de fonctionnement intermédiaire T1 distincte de T0 et T2, et intermédiaire entre ces deux valeurs. Ceci permet de réduire les contraintes en consommation sur le bloc d'amplification.

Une autre mise en œuvre est montrée en Figure 10 en partie basse avec un bloc d'amplification G1 à faible température T0 et un autre bloc d'amplification G2 à une température plus élevée mais intermédiaire T1. Ceci permet un premier bloc de gain à très faible bruit qui réduit la contrainte de bruit du second bloc.

Dans des variantes, des schémas d'amplification en courant avec une chaîne de démodulation adaptée sont utilisés, comme par exemple avec un convertisseur analogique numérique qui convertit un courant (son entrée) en mot numérique pour être traité par la chaîne de démodulation numérique décrite précédemment.

Enfin dans une variante, aucune amplification n'est mise en œuvre, le signal étant directement exploitable.

### Démodulation

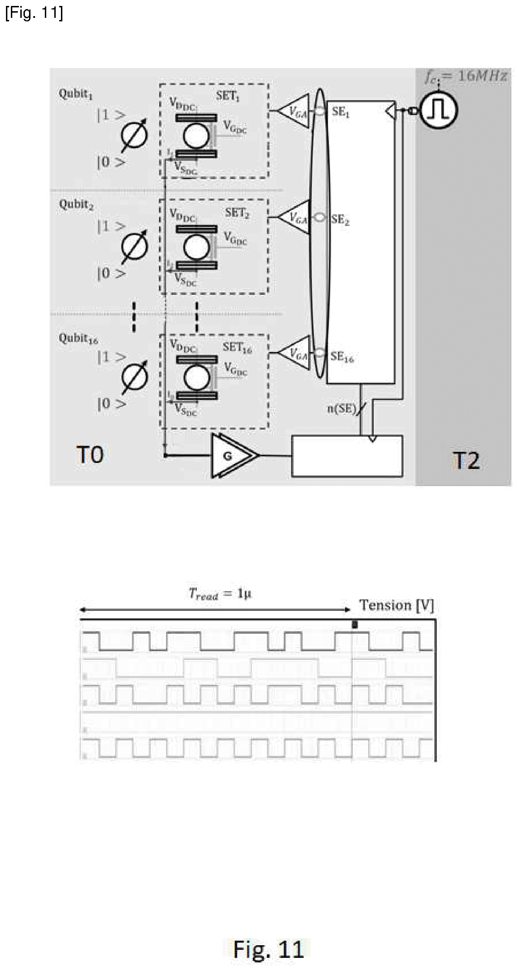

Les Figures 11, 12, 13 et 14 montrent les différents signaux et leur emplacement dans le circuit.

[Fig. 11] La Figure 11 montre les signaux en sortie du contrôleur numérique présenté en Figure 5 (marqué par un cadre ovale sur le circuit en haut de figure) qui est appliqué aux transistors de lecture. La longueur d'une séquence d'étalement Tread 1 µs est indiquée sur l'axe du temps, à savoir l'axe des abscisses. L'axe des ordonnées représente la tension, puisque les signaux en sortie du contrôleur numérique sont des signaux en tension. Cinq séquences sont représentées de haut en bas sur la partie basse de la figure.

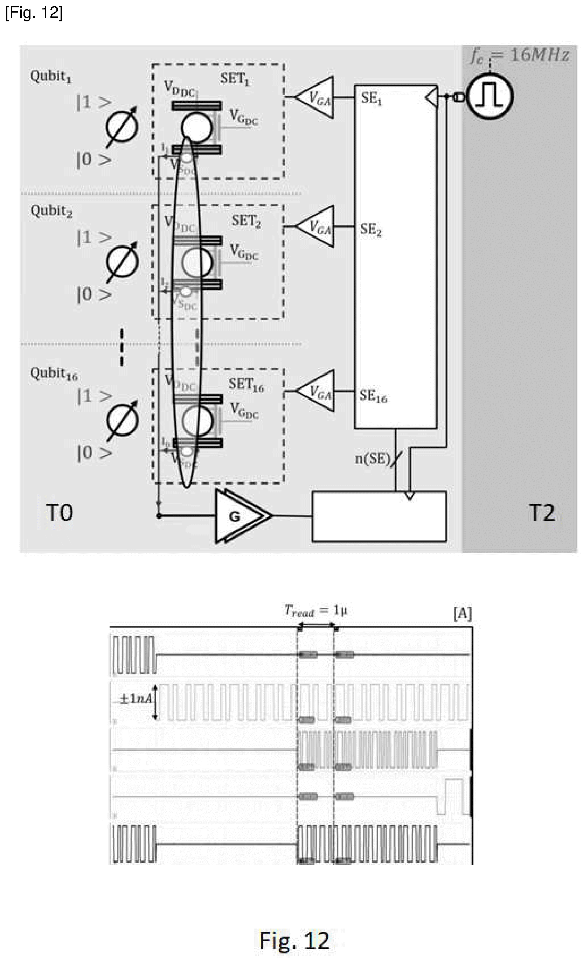

[Fig. 12] La Figure 12 présente les courants modulés en sortie des transistors de lecture (marqués par un cadre ovale sur le circuit en haut de figure). La longueur d'une séquence d'étalement Tread 1 µs est à nouveau indiquée sur l'axe du temps, à savoir l'axe des abscisses sur le graphe en fonction du temps présenté en partie basse de la figure. L'axe des ordonnées représente le courant, puisque la sortie des transistors de lecture est un courant. Les signaux de sortie de cinq transistors sont représentés de haut en bas sur la partie basse de la figure. L'amplitude des courants est de l'ordre de 1 nA.

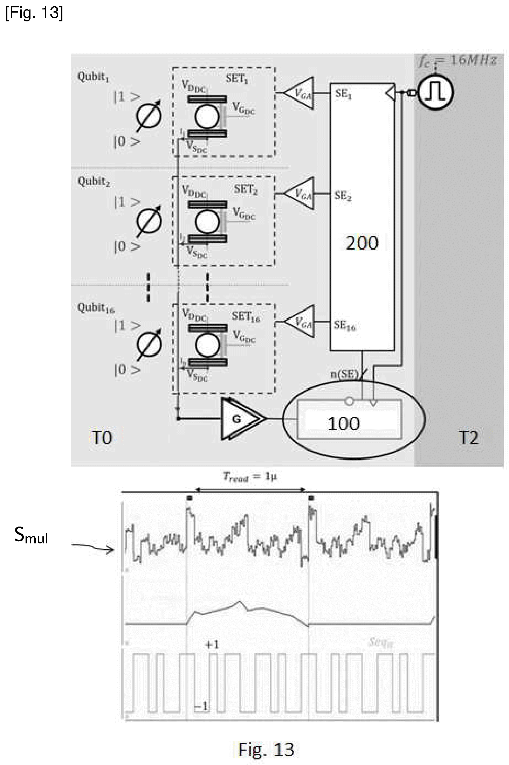

[Fig. 13] La Figure 13 s'intéresse au signal amené au bloc de démodulation 100. Ce signal résulte de la somme de tous les courants produits par les transistors de lecture, agrégés sur une ligne unique, cette somme étant ensuite amplifiée par la chaîne d'amplification et envoyée sous cette forme amplifiée au bloc de démodulation 100 (bloc marqué par un cadre ovale sur le circuit en haut de figure).

La longueur d'une séquence d'étalement Tread 1 µs est à nouveau indiquée en partie basse de la figure, sur l'axe du temps, à savoir l'axe des abscisses. L'axe des ordonnées représente le signal. La séquence d'étalement d'un transistor particulier seqH est représentée, en partie inférieure du graphe - il s'agit d'un signal créneau entre les valeurs -1 et 1, avec seulement deux niveaux, se succédant pas plus vite que le temps chip. La longueur de séquence d'étalement Tread est égale au temps bit et que séquences sont cadencées au temps chip et périodique du temps bit (ou Tread). Les séquences envoyées par le bloc présenté en Figure 5 sont transmises au module de démodulation 100 avec une faible latence par le contrôleur numérique 200 à l'aide d'une liaison n(SE) indiquée sur le circuit en partie haute de la figure. En partie haute du graphe le signal amené au bloc de démodulation 100 est représentée : il s'agit d'un signal Smul prenant d'assez nombreux niveaux différents, mais dans lequel on peut néanmoins reconnaître des créneaux superposés se succédant au rythme des temps chip.

Pour effectuer la démodulation, la séquence seqH est multipliée avec le signal Smul et intégrée sur le temps de lecture Tread. La courbe au milieu du graphique de la Figure 13 montre le résultat de cette opération en fonction du temps. Dans le cas particulier, l'intégration tend en fin d'intervalle d'intégration vers la valeur 0, indiquant que la séquence n'est pas présente dans le signal examiné.

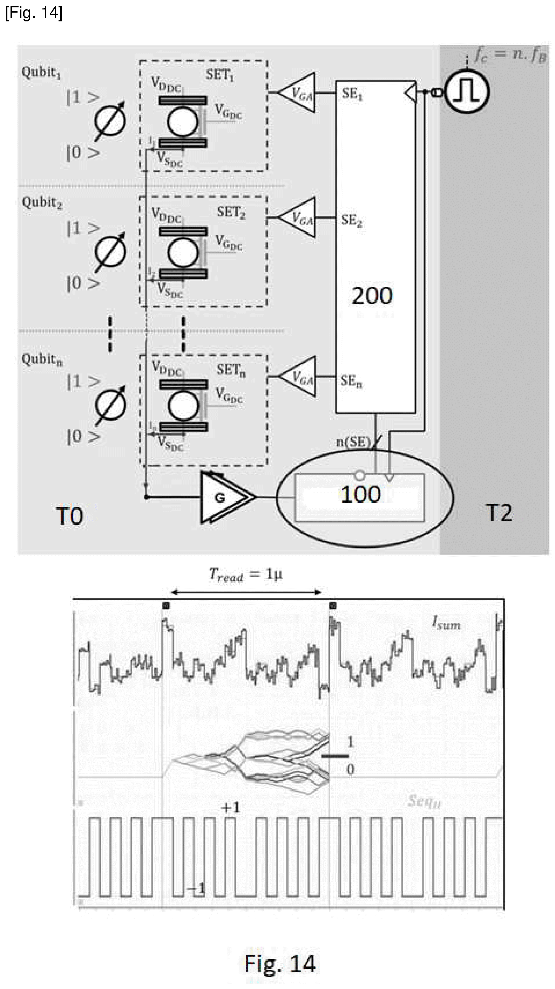

[Fig. 14] La Figure 14 montre le même processus que la Figure 13 mais avec les résultats d'intégrations et de multiplications de 16 séquences superposées. On peut voir que certains de ces résultats tendent vers 1- ils correspondent aux séquences contenues dans le signal - et vers 0 pour d'autres - quand la séquence n'est pas contenue dans le signal. Un seuil de détection est mis entre les deux valeurs 0 et 1 et permet de connaître l'état de chaque transistor de lecture et donc l'état de chaque qubit en fonction de la proximité entre la valeur finale de l'intégration et les valeurs 0 et 1.

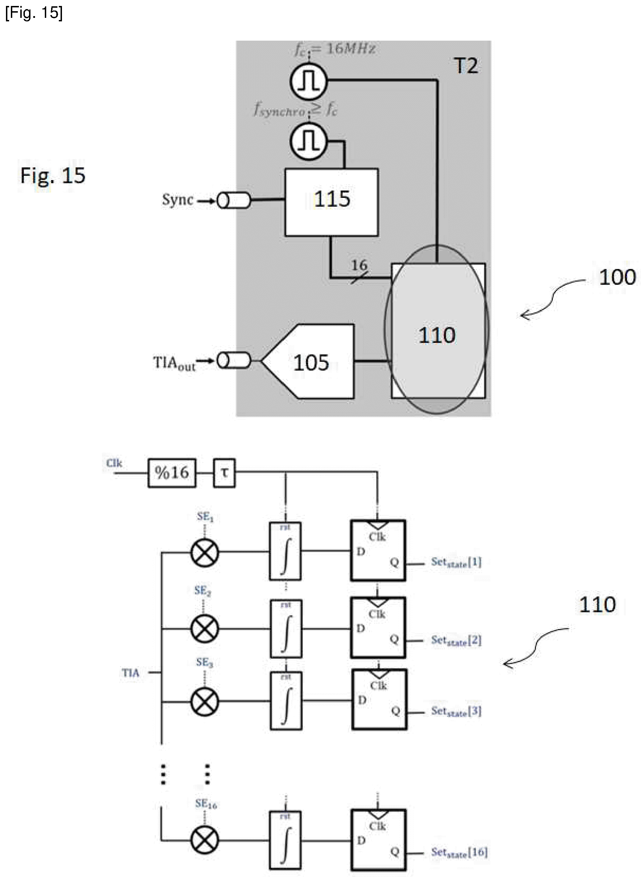

[Fig. 15] Pour réaliser la fonction démodulation, différentes approches sont utilisées dans différents modes de réalisation.

Par exemple la Figure 15 montre un module de démodulation 100 à chaud (à la température T2) composé d'un convertisseur analogique-numérique CAN 105 qui numérise le signal en sortie de la chaîne d'amplification (localisée par la référence TIAₒᵤₜ) et d'un sous-système numérique 110 réalisant la multiplication et l'intégration. Une génération à chaud des séquences d'étalement nécessite une synchronisation avec l'étage à froid. Elle est réalisée par un générateur de séquences 115. La synchronisation permet de retrouver le temps bit.

On voit sur le schéma détaillé en bas à droite de la Figure 15 le signal amplifié par la chaine d'amplification (localisée par la référence TIA) et numérisé par le convertisseur analogique numérique CAN 105 qui est appliqué en parallèle à 16 voies de démodulation.

Ce signal est tout d'abord multiplié sur chacune de ces voies par une des 16 séquences d'étalement (SE1, ...SE16).

L'horloge générée à chaud est divisée par 16 et déphasée afin de compenser le décalage temporel amené par la longueur de câble et la propagation des séquences d'étalement depuis l'étage de température inférieure. Cette horloge divisée et déphasée pour correspondre aux fenêtres de 1 µs des séquences d'étalement pilote des intégrateurs qui sont remis à zéro au début de chaque nouvelle lecture. En sortie l'état des intégrateurs est sauvegardé juste avant la remise à zéro. Tous les calculs se font en accord avec le nombre de bits du convertisseur analogique numérique qui ici, à titre d'exemple, est dimensionné autour de 6 bits (le convertisseur analogique numérique est de résolution suffisante pour ne pas dégrader la mesure et le sous-système numérique est dimensionné d'après la résolution du convertisseur analogique numérique). L'information en sortie du sous-système numérique 110 du module de démodulation 100 est directement l'état du transistor de lecture, pour chaque transistor.

La chaîne de démodulation est dans une autre variante une chaîne analogique.

La recomposition des séquences se fait à plus haute fréquence que le temps chip. La fréquence de recomposition des séquences d'étalement correspond à l'erreur maximale qui est faite. Si f_{synchro} = 10 * f_{c} l'erreur est au pire d'un dixième de temps chip entre les séquences d'étalement à chaud et à froid.

La fonction démodulation, incluant éventuellement la conversion vers un signal numérique, peut être partitionnée au sein des étages de températures. Ce partitionnement en température permet de surmonter des contraintes de bandes passantes justifiant la numérisation à basse température ou à température intermédiaire pour réduire les parasites de connexions. La démodulation à froid est justifiée dans des variantes par des contraintes de synchronisation, certains algorithmes correcteurs comme le code surface ayant besoin d'un temps de réaction court sur les qubits à corriger. Amener la démodulation à froid permet de réduire ce temps de contre réaction par le gain de propagation dans les câbles (environ 5ns/m de câble) et par une électronique dédiée plus rapide.

Les fonctions placées à chaud ne nécessitent pas, à l'inverse, de développement spécifique aux conditions cryogéniques, et ne présentent pas de contraintes en consommation ou surface. On place donc, dans une variante, le démodulateur numérique à température T2, alors que le convertisseur analogique numérique est placé à température T0.

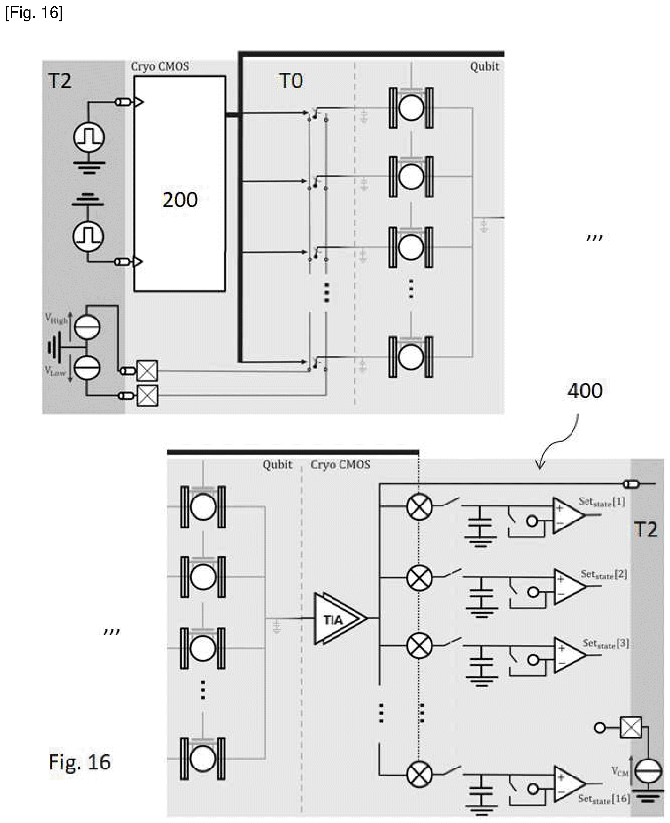

[Fig. 16] Une démodulation analogique remplace dans certaines variantes la démodulation numérique, et il n'y alors pas de convertisseur analogique numérique. Ceci réduit la consommation équivalente du circuit.

Un schéma de chaîne de démodulation analogique 400 est présenté en Figure 16 où la démodulation est faite à froid (à température T0). Le signal modulé par codes numériques est amplifié, par exemple via un amplificateur à transimpédance TIA, et ce signal est ensuite transmis en parallèle à 16 mélangeurs. Ces mélangeurs combinent le signal émis par l'amplificateur à transimpédance à chacune des 16 séquences générées à froid. Si les mélangeurs produisent un courant, ce courant se propage dans une capacité qui a été pré-chargée à une tension de mode commun. Le courant est donc intégré dans la capacité sous forme de tension pendant le temps de lecture (1 µs dans l'exemple de la section précédente) avant d'être comparé à la tension de mode commun à laquelle avait été pré chargée la capacité, ce qui fournit une information numérique par transistor.

L'architecture présentée en Figure 16 permet donc la lecture à froid des transistors de lecture puisqu'en sortie de chaîne de démodulation l'état des transistors de lecture est numérisé. Cette solution permet de réaliser une architecture intégrée pour par exemple réaliser du multiplexage temporel entre différents cœurs ou du calcul multi cœur.

### Lien série SerDes vers l'extérieur du cryostat

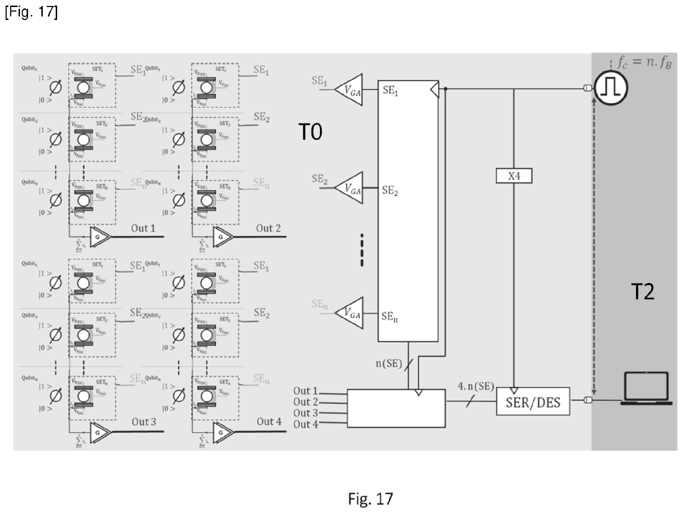

[Fig. 17] Un lien série haut débit à froid permet dans certaines réalisations d'extraire toutes les données hors du cryostat sur un seul câble. Les données séries sont transférées à la fréquence chip f_{c} soit n. f_{B} qui permet de lire n qubits.

La figure 17 présente quatre canaux de n transistors à un électron chacun. Ces quatre canaux sont identiques : ils reçoivent les mêmes n séquences d'étalement pour moduler les n transistors auxquels ils sont associés. Les données quantiques sont par contre différentes mais le fonctionnement est le même.

On met en commun les moyens numériques de modulation, puisque les n séquences d'étalement sont les mêmes pour tous. Les quatre amplificateurs des quatre canaux constituent chacun une sortie. On met en place un bloc de démodulation capable de traiter quatre sorties d'amplificateur en parallèle. Alternativement on duplique quatre fois le bloc de démodulation pour un seul canal comme mentionné plus haut.

L'exemple présenté implique la reprise d'une sortie des données série vers l'extérieur. Puisqu'il y a quatre canaux, la fréquence de sortie est une fréquence égale à 4 fois la fréquence chip. Un multiplieur de fréquences à froid est mis en place. Il n'y a que deux câbles traversant l'enveloppe du cryostat.

Selon les fréquences et l'énergie dissipée ce multiplieur de fréquence est remplacé dans certaines variantes par un câble pour la fréquence de la sortie série.

## Revendications

1. Dispositif quantique comprenant une pluralité de qubits de spin (Qubit1, ... Qubitn), un cryostat (10) contenant lesdits qubits, des électromètres (SET1, ... SETn) couplés chacun à un qubit de la pluralité pour extraire, pour chaque qubit, un signal de lecture d'un état courant du qubit, un module de génération de tensions (200) générant une pluralité de tensions pour exciter lesdits électromètres avec des modulations propres à chaque électromètre, et une ligne de transmission (40) pour transmettre un signal agrégé issu des électromètres, ledit signal agrégé étant traité par un module de démultiplexage (100) du dispositif quantique pour reconnaître par démodulation les états courants des qubits de la pluralité, le dispositif quantique étant **caractérisé en ce que** le module de génération de tensions (200) génère des séquences périodiques (SE1, ... SEn) cadencées à une fréquence de référence (fc), lesdites séquences périodiques générées étant distinctes les unes des autres et utilisées pour exciter de manière différenciée les électromètres, le module de démultiplexage (100) accédant aux états courants des qubits à l'aide de ladite fréquence de référence (fc) et desdites séquences périodiques (SE1, ... SEn).

2. Dispositif quantique selon la revendication 1, **caractérisé en ce que** les séquences périodiques (SE1, ... SEn) sont des séquences orthogonales entre elles.

3. Dispositif quantique selon la revendication 2, **caractérisé en ce que** les séquences périodiques sont des séquences d'Hadamard ou des séquences générées par pseudo-bruit.

4. Dispositif quantique selon la revendication 1, **caractérisé en ce que** les séquences périodiques (SE1, ... SEn) sont des séquences de Gold, la démodulation étant faite à chaud.

5. Dispositif quantique selon l'une des revendications 1 à 4, **caractérisé en ce que** les séquences périodiques (SE1, ... SEn) sont générées par le module de génération de tensions (200) à l'intérieur du cryostat (10).

6. Dispositif quantique selon l'une des revendications 1 à 5, **caractérisé en ce que** le module de démultiplexage (100) procède, séquence par séquence, par intégration du signal agrégé multiplié par la séquence périodique sur un temps de lecture commun aux différentes séquences, pour reconnaître la présence ou l'absence de la séquence périodique dans le signal agrégé.

7. Dispositif quantique selon l'une des revendications 1 à 6, **caractérisé en ce que** le signal agrégé est préalablement traité par un module de numérisation (105) aux fins de la démodulation par le module de démultiplexage (100), ou le signal agrégé est démultiplexé à l'intérieur du cryostat (10) par un circuit analogique (400) comprenant pour chaque qubit une capacité et un comparateur.

8. Dispositif quantique selon l'une des revendications 1 à 7, **caractérisé en ce que** le dispositif quantique comprend des modules de mise à niveau de tension pour adapter aux points de polarisation des électromètres des tensions fournies par un générateur numérique de tension du module de génération de tensions, chaque module de mise à niveau comprenant un commutateur piloté (301, ... ,30n) pour alterner entre deux tensions continues, ou un diviseur de tension résistif ou capacitif.

9. Dispositif quantique selon l'une des revendications 1 à 8, **caractérisé en ce que** le module de génération de tensions (200) génère des codes numériques sur deux niveaux.

10. Dispositif quantique selon l'une des revendications 1 à 9, **caractérisé en ce que** le module de génération de tensions (200) comprend un registre à décalage (210, ... 21n) par qubit de la pluralité de qubits aux fins de générer les différentes séquences périodiques.

11. Dispositif quantique selon l'une des revendications 1 à 10, **caractérisé en ce que** le module de génération de tension (200) est mis en commun pour plusieurs pluralités de n qubits, les mêmes n séquences périodiques étant utilisées pour chaque pluralité, lesdites pluralités de qubits étant associées chacune à un signal agrégé propre.

12. Dispositif quantique selon l'une des revendications 1 à 11, **caractérisé en ce que** les électromètres sont des transistors à un électron, modulés par la source ou la grille.

13. Dispositif quantique selon l'une des revendications 1 à 12, **caractérisé en ce que** les qubits et les électromètres sont construits en face à face dans un matériau semi-conducteur.

14. Dispositif quantique selon l'une des revendications 1 à 13, **caractérisé en ce que** les séquences périodiques générées sont fournies au module de démultiplexage (100) dans le cryostat (10) par le module de génération de tensions (200), ou à l'extérieur du cryostat (10) par un module (115) synchronisé avec le module de génération de tensions.

15. Dispositif quantique selon l'une des revendications 1 à 14, **caractérisé en ce que** la fréquence de référence (fc) est fournie dans le cryostat au générateur de tensions (200) par un générateur de signal d'horloge extérieur au cryostat.
